# EUROPEAN PATENT SPECIFICATION

(11) **EP 2 030 745 B1**
(45) Date of publication and mention of the grant of the patent: **08.12.2010**
(21) Application number: 08159688.4
(22) Date of filing: 04.07.2008
(51) Int. Cl.: B27B 5/065, B27B 25/00, B23D 45/02, B23D 47/04

(54) **Structure for feeding automatic panel cutting machines**
Struktur zur Beschickung automatischer Tafelschneidemaschinen
Structure pour alimenter des machines automatiques à découper des panneaux

(30) Priority: 11.07.2007 IT PS20070024
(43) Date of publication of application: 04.03.2009
(73) Proprietor: Macmazza S.r.l., 61100 Pesaro PU (IT)
(72) Inventor: Storoni, Alberto, 61100 Pesaro (PU) (IT)
(74) Representative: Gustorf, Gerhard

(56) References cited:
- EP-A- 0 494 404
- DE-A1- 3 107 438

## Description

### Field of the invention

The present invention relates to a structure for feeding automatic panel cutting machines as set forth in the preamble of claim 1.

Such a structure is disclosed in DE 31 07 438 A1 according to which the feeding table is an integrated element of the cutting machine in which it is mounted in a vertically movable manner.

A similar structure is known from EP 494 404 A in which the vertical movable feeding table again is a firmly positioned element of the cutting machine.

### Technical background

Automatic panel cutting machines are those machine tools suitable for cutting panels of wood replacements, if necessary including handling equipment, called grippers, for one or more stacked panels, or already cut sections of panels, that are used to slide the panels along a plane and to position the panels for the pre-cutting and cutting equipment.

When cuts must be made perpendicular to each other, the panels must be rotated 90° on the work surface of the cutting machines.

Most sophisticated equipment for performing cutting operations are equipped with automatic systems for feeding and orientating the panels. The panels are thus set directly on the work surface inside the machine, and there, once the first cut is made, they are rotated in order to perform the perpendicular cut.

The need to feed the panels directly into such machines, as well as the need to rotate the panels 90°, makes this equipment very complex, expensive, and bulky; so much so that most users usually prefer to use simpler machines where the panels are fed manually, perhaps assisted by the use of a forklift.

These machines are manually fed single panels or stacks of panels through the horizontal opening defined by the work surface inside the machine and the tool gantry. This includes the equipment for grabbing and pulling the panel into the working area and pushing out the cut parts. It is during the expulsion phase that the cutting equipment performs its work, set up and guided by electronics as well as the grippers. Once cut, the cut panels are then manually turned 90° and once again fed into the machine by the operator for the perpendicular cut.

### Identification of Specific Technical Challenge

It is obvious that manually feeding the panel or stack of panels into the cutting machine, rotating them 90° after the first cut, and feeding them into the cutting machine for a second cut is often a exhausting job for workers. It is also obvious that it is a bottleneck for machine utilization.

### Objects of the Invention

The main object of the present invention is to provide a tool to facilitate the front feed of panels into automatic panel cutting machines within the scheme described above, as well as to facilitate the removal of the first cut, their 90° rotation, and re-feed into the machine for a further cutting.

A second object of the present invention is to facilitate the manual feeding and handling of panels on cutting machines thus increasing not only the productivity but also the efficiency, adding value to the machine's capabilities in direct proportion to the reduction in operator effort.

A third object of the present invention is to reach the aforementioned objects with equipment that is as effective and modular as possible, and that can adapt to various operational requirements.

A fourth object of the present invention is to reach the aforementioned objects with equipment that occupies as little operational space as possible.

The final object of the present invention is to reach all of the aforementioned objects with simple, effective, safe to operate equipment that is relatively economical given the practical results attained.

### Summary of the Invention

These objects, and others, are all met by the structure for feeding automatic panel cutting machines comprising the features of claim 1. The structure described in the specification consists of a trolley with support surface crossed by continuous through-cut grooves for the introduction, on two sides, of the forks of a forklift that describe at least three base planes that can be moved horizontally at an angle into a position facing the front of the cutting machine and vice versa. The base planes are preferably shaped with bevelled corners and shortened sections that complementarily interact with at least one "L" shaped workstation located to the side of the front of the cutting machine. These base planes are likewise preferably slidable and can be horizontally stacked against each other in the trolley.

### Brief Description of the Drawings

Further features and advantages provided by the structure to feed automatic panel cutting machines described in this invention are shown in the detailed description of the construction that follows, provided only for example purposes, but not exclusive of nor limited to the eight drawings attached. The attached drawings are:
Figure 1 shows the prospective view of a schematic panel cutting machine with an example of the trolley described in this invention in front of it.
Figures 2 to 8 show top views of the same number of operational positions of a sample trolley described by this invention as applied to a panel cutting machine.

### Static Description of the Preferred Embodiment

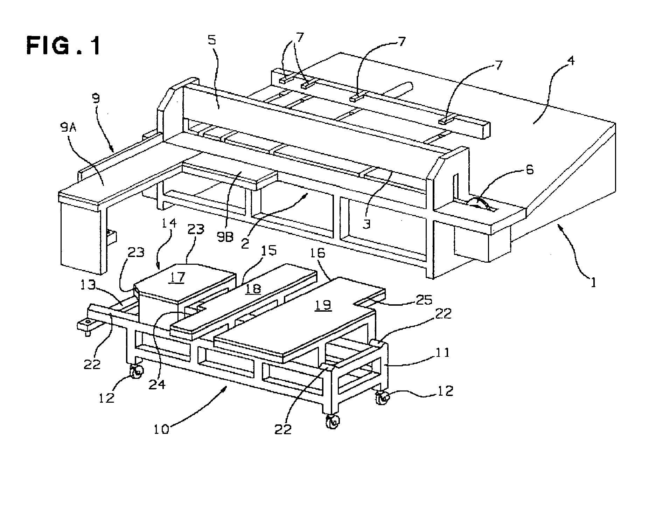

With reference to the figures attached, and in particular with reference to Figure 1, where 1 indicates the complete typical cutting machine, as outlined, including a front feed, indicated as 2, where the horizontal slot 3 is defined by the work surface 4 and above by the gantry 5 where at least one tool 6 is located.

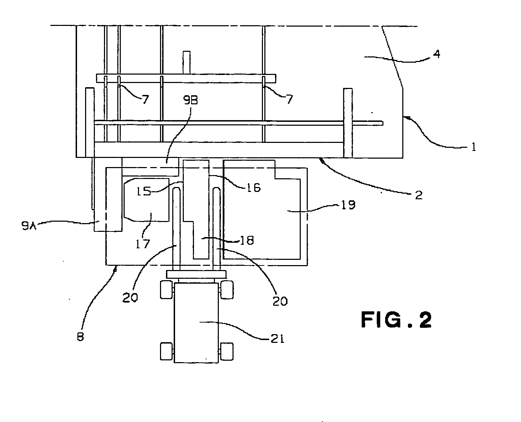

Slides on the work surface 4 are schematically illustrated by the panel 8 and grippers 7, where 8A, 8B, and 8C indicate the strips of the panel cut by the cutting equipment (see Figures 2 to 8).

To one side of the front 2 of the machine 1 there is a workstation, indicated as 9, on the same level as the work surface 4. From an overhead view, it can be seen that this workstation is "L" shaped with one surface 9A perpendicular to the front 2 of the machine 1 and the other 9B parallel to it.

In front of the cutting machine 1 an example of a service trolley 10 as described by this invention is schematically illustrated, hinged to the work island 9 by an arm 13. The trolley consists of a base 11 with a rectangular top section mounted on wheels 12 that sliding on the floor. The surface 14 of the trolley is crossed by two continuous through-cut grooves 15 and 16 that define three base planes 17 18 and 19 for the entry of the forks 20 of a fork truck 21.

The three base planes 17, 18 and 19, respectively defined as front, middle and rear in reference to their proximity of the hinged arm 13, can slide horizontally and be stacked against each other by sliding on the guides 22 of the base 11 of the trolley 10.

The front base plane 17 preferably has bevelled front corners 23 and a reduced width.

The middle base plane 18 preferably has shortened sections on the front external side 24 that connect to the shorter width of the front base level 17

The rear base plane 19 has preferably a shortened rear corner section 25 on the front inner side.

All of the base planes 17, 18, and 19 and the workstation 9 preferably have air flotation or an air cushion that is created using the multiple holes on their surfaces and exiting compressed air from the holes for the functions that are described specifically below.

### Dynamic Description of the Preferred Embodiment

Having completed the structural description, it is suitable to provide a dynamic example of the proffered construction of the structure for feeding automatic panel cutting machines using the invention described to appreciate its operation.

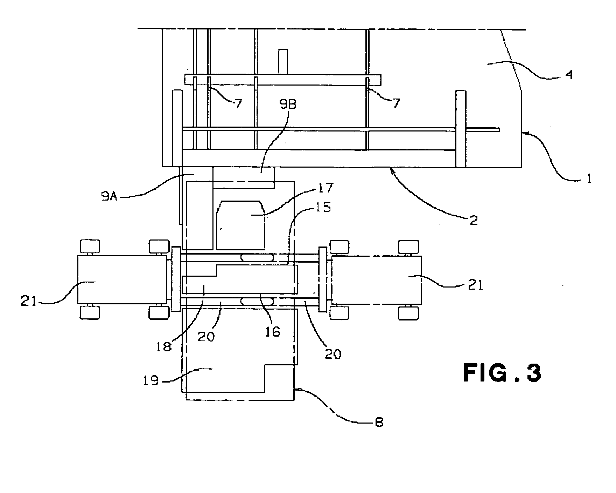

A panel 8 or stack of panels 8 can be set on the surface 14 of the service trolley 10 using a forklift 21. The forks 20 of the forklift can fit into the special continuous grooves 15 and 16 on the surface 14, and the trolley 10 can be approached from either side as shown in Figures 2 and 3.

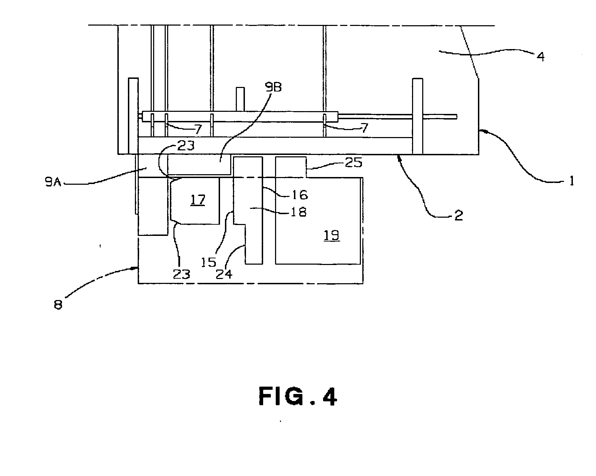

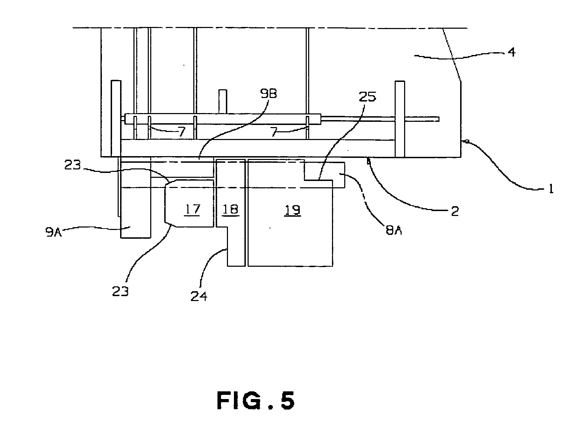

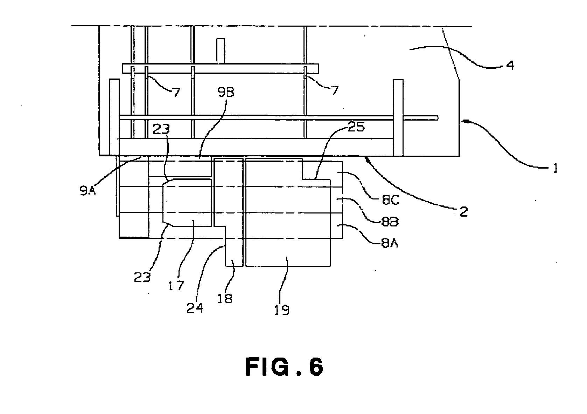

The panels 8 are mainly fed into the cutting machine 1 widthwise from the trolley 10, with respect to the front 2 of the cutting machine 1, as shown in Figure 4. From this position, the panels 8 are fed widthwise into the into the slot 3 and are picked-up by the grippers 7 which pull the full width of the panels onto the work surface 4. Once completely retracted, the panels are then pushed out for a set distance and the tool 6 performs the cut of the first strip 8A. When this first cutting operation is complete, the panels are retracted and pushed out for a second cut (second strip, 8B). These operations are repeated until the all of the lengthwise cuts of the panels 8 are complete, as shown in Figures 5 and 6.

At this stage, the strips 8A, 8B, 8C,. etc. are all set on the trolley 10 which is in the widthwise position front-on with respect to the front 2 of the cutting machine 1 (see Figures 5 and 6). In the meantime, the base planes may be stacked to reduce the footprint of the surface 14 and to make the strips 8A, 8B, 8C, etc. easier to manage by eliminating points of suspension between the surfaces with air cushions and the base planes 17, 18, and 19.

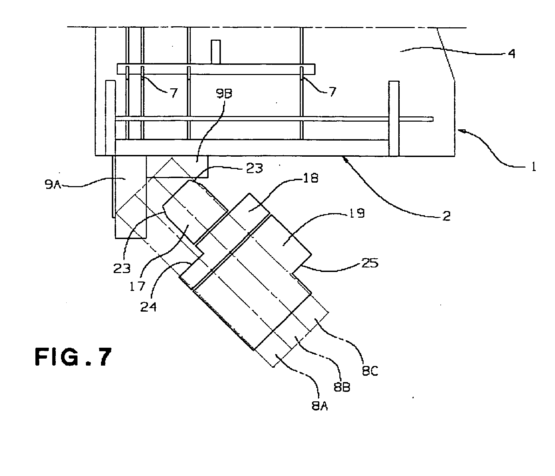

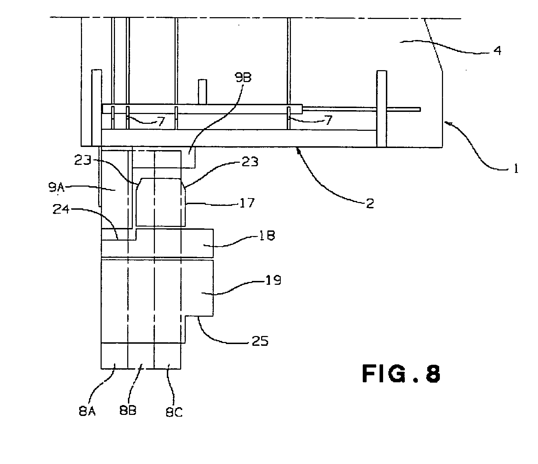

Once all the strips 8A, 8B, 8C, etc. have been accumulated on the surface 14, the trolley 10 can be slid from the widthwise position to a lengthwise position with respect to the front 2 of the cutting machine 1. Preferably, rotation is guided and checked by the hinged arm 13 as illustrated in Figures 7 and 8.

In this position, the trolley 10 fully involves the island workstation 9 and the operator, without any particular difficulty or fatigue, feeds the strips 8A, 8B, 8C, etc. into the feed slit 3 where the continuity between the air cushion on the surface 14 of the trolley 10 and on the surface of the workstation 9 eliminates any changes in level or friction that could create limit operation.

### Alternative Embodiments

It is obvious that alternatives exist for performing the same operations applying the same concept as shown in the example solution illustrated. These are listed below. The structure for feeding automatic panel cutting machines as described by this invention can be constructed with equivalent techniques and mechanics, or equipped with integral devices, as all of the shapes of the relative parts can be varied in order to suit the objective in particular:

The number and shape of the base planes can be varied

Fasteners can be provided, where there are slides, for the sliding members. The sliding members can be of any type in addition to those shown in the example, for example different shaped slides, wheels in tracks, on rails, or any other manner suitable for the objective

The movement of the trolley around the hinged arm can be motorized

### Advantages of the Invention

As is evident from the detailed description above, which shows a preferred manner of operation, and the examples provided above of a few of the possible variations in construction, that the structure for feeding automatic panel cutting machines as described by this invention provides advantages that meet the aforementioned objectives as well as others:

This structure is a beneficial accessory for manually fed panel cutting machines as it can reduce the production bottleneck created during manual feed with the considerable reduction in physical efforts by the operators during feeding.

The trolley structure, as described by this invention, is highly advantageous not only for changing the orientation of lengthwise cut panels in order to perform additional widthwise cuts, but also for turning the entire pack of panels in order to perform end cuts or pre-cuts.

It has been shown that the more complex the cutting scheme is on the software for optimization, the more waste per panel is reduced with the same operator effort/cost.

Consequently, the trolley structure described by this invention allows, in fact, the optimum use of cut/waste optimization software without the stress of limiting the number of "complicated cuts", which is normally done to reduce the operator efforts (which also represents an important cost) and/or for the same reason, without reducing the thickness/weight of the stack subjected to "complicated cuts".

Furthermore, it is possible to front load panels on the structure of the trolley described in this invention using a forklift, eliminating the need to rotate the packs of panels. Similarly, parts can also be unloaded, eliminating the work of two strong, quick operators as mechanical unloading can be performed by separating the base planes, regardless of the cuts performed on the panels (obviously until the dimensions of the pieces are not reduced to such a size that they are no longer compatible with the means of lifting).

### KEY TO NUMBERS

1)Cutting machine
2)Front Feed
3)Lengthwise Slit for Panel Feed
4)Work Surface
5)Tool Gantry
6)Tool
7)Panel Grippers
8)Panels
8A) First Strip Cut
8B) Second Strip Cut
8C) Third Strip Cut
9)Workstation
9A) Plane Perpendicular to Machine Front
9B) Plane Parallel to Machine Front
10)Service Trolley
11)Base
12)Wheels for Ground Movement
13)Hinged Arm
14)Surface of Trolley
15)First Groove for Forklift
16)Second Groove for Forklift
17)Front Base Plane
18)Middle Base Plane
19)Rear Base Plane
20)Forklift Forks
21)Forklift
22)Base Plane Slide Guides
23)Front Bevelled Corners of Front Base Plane
24)Shortened Section of Middle Base Plane
25)Shortened Section of Rear Base Plane

## Claims

1. Structure for feeding automatic panel cutting machines, where one or more panels are stacked (8) and fed to front (2) of a such a machine (1) into a lengthwise slit (3) defined by a tool (6), a gantry (5) and a work surface (4 ) on which grippers (7) slide panels (8) or parts of panels (8A, 8B, 8C), wherein said structure includes a stack and feeding table with support surface (14) crossed by continuous through-cut grooves (15, 16) for the introduction, on two sides, of the forks (20) of a forklift (21), said grooves defining at least three base planes (17, 18, 19), **characterized by** the fact that said stack and feeding table is a trolley (10) having a base (11) which is mounted on wheels (12) for sliding over the ground to be slid horizontally from a widthwise position to a lengthwise position with respect to the front (2) of the cutting machine (1) and vice versa.

2. Structure according to claim 1, **characterized by** the fact that said base planes (17, 18, 19) are shaped and have bevelled corners (23), with shorted sections (24, 25) able to interact in a complementary manner with at least one "L" shaped (9) workstation positioned laterally to said front (2) of the cutting machine (1).

3. Structure according to claim 1 or 2, **characterized by** the fact that said base planes (17, 18, 19) can slide and can be stacked horizontally on the trolley (10).

4. Structure according to any of the preceding claims, **characterized by** the fact that said base planes (17, 18, 19) have varying widths as well as bevelled corners (23) and shortened squared sections (24 , 25).

5. Structure according to any of the preceding claims, **characterized by** the fact that said trolley(10) is hinged to a workstation (9) of said cutting machine by an arm (13).

6. Structure according to any of the preceding claims, **characterized by** the fact that the said base planes (17, 18, 19) of said trolley (10) as well as the surface of the workstation (9) have air flotation or air cushion using the multiple slots in the surfaces and the exiting compressed air from these holes.

7. Structure according to any of the preceding claims, **characterized by** the fact that the workstation (9) is "L" shaped with one surface (9A) perpendicular to the front (2) of the machine (1) and one surface (9B) parallel to the front (2) of the machine (1).

8. Structure according to any of the preceding claims, **characterized by** the fact that the movement of said trolley (10) and/or of said base planes (17, 18, 19) is motorized.

## Patentansprüche

1. Einrichtung zur Beschickung automatischer Plattenschneidmaschinen, bei der eine oder mehrere, übereinander liegende Platten (8) zur Vorderseite (2) in einen Längsschlitz (3) der Schneidmaschine zugeführt werden, welcher begrenzt ist durch eine Brücke (5) für das Werkzeug (6) und eine Arbeitsebene (4), auf der Greifer (7) die Platten (8) oder Plattenteile (8A, 8B, 8C) verschieben, wobei die Vorrichtung einen Stapel- und Zuführtisch mit einer Aufnahmefläche (14) aufweist, die kontinuierlich durchgehende Schlitze (15,16) durchqueren, in die von beiden Seiten Gabeln (20) eines Hubwagens (21) einführbar sind und die wenigstens drei Basisebenen (17,18,19) begrenzen, **dadurch gekennzeichnet, dass** der Stapel- und Zuführtisch ein Wagen (10) mit einem Grundgestell (11) ist, das auf Rädern (12) zum Verfahren auf dem Boden so verschiebbar ist, dass es bezüglich der Vorderseite (2) der Schneidmaschine (1) horizontal aus einer Querstellung in eine Längsstellung und umgekehrt verschoben werden kann.

2. Einrichtung nach Anspruch 1, **dadurch gekennzeichnet, dass** die Basisebenen (17,18,19) Formflächen mit abgeschrägten Ecken (23) und eingeschnittenen Abschnitten (24,25) sind, die eine Komplementärinteraktion mit wenigstens einer L-förmigen Arbeitsstation (9) erlauben, die seitlich von der Vorderseite (2) der Schneidmaschine (1) angeordnet ist.

3. Einrichtung nach Anspruch 1 oder 2, **dadurch gekennzeichnet, dass** die Basisebenen (17,18,19) in Längsrichtung auf dem Wagen (10) verschiebbar und stapelbar sind.

4. Einrichtung nach einem der vorhergehenden Ansprüche, **dadurch gekennzeichnet, dass** die Basisebenen (17,18,19) zueinander unterschiedliche Breiten sowie abgeschrägte Ecken (23) und rechteckig eingeschnittene Abschnitte(24,25) haben.

5. Einrichtung nach einem der vorhergehenden Ansprüche, **dadurch gekennzeichnet, dass** der Wagen (10) mittels eines Armes (13) an einer Arbeitsstation (9) der Schneidmaschine angelenkt ist.

6. Einrichtung nach einem der vorhergehenden Ansprüche, **dadurch gekennzeichnet, dass** die Basisebenen (17,18,19) des Wagens (10) sowie die Oberfläche der Arbeitsstation (9) als Luftfilm- oder Luftkissenebenen ausgebildet sind und hierzu eine durchlöcherte Fläche für den Austritt von Druckluft haben.

7. Einrichtung nach einem der vorhergehenden Ansprüche, **dadurch gekennzeichnet, dass** die Arbeitsstation (9) einen L-förmigen Grundriss hat, von dem eine Fläche (9A) rechtwinklig und eine Fläche (9B) parallel zur Vorderseite (2) der Schneidmaschine (1) verläuft.

8. Einrichtung nach einem der vorhergehenden Ansprüche, **dadurch gekennzeichnet, dass** der Wagen (10) und/oder die Basisebenen (17,18,19) einen motorisierten Bewegungsantrieb haben.

## Revendications

1. Dispositif pour alimenter des machines automatiques à découper des panneaux dans lequel un ou plusieurs panneaux (8) superposés sont dirigés vers la face frontale (2) de la machine à découper et dans une fente longitudinale (3) de ladite machine, ladite fente (3) étant limitée en haut par un pont (5) contenant l'outil de coupe (6) et en bas par un plan de travail (4) sur lequel des éléments de prise (7) transportent les panneaux (8) ou les parties de panneaux (8A, 8B, 8C), ledit dispositif étant muni d'une table d'empilage et d'alimentation avec une surface portante (14) dans laquelle sont pratiquées des fentes passantes (15, 16) par lesquelles peuvent passer de deux côtés les fourches (20) d'un chariot élévateur (21) et qui limitent au moins trois plans de base (17, 18, 19), **caractérisé par le fait que** la table d'empilage et d'alimentation se présente sous la forme d'un chariot (10) avec un bâti de support (11) se déplacant sur le sol par des roulettes (12) des sorte que ce bâti (11) puisse être déplacé horizontalement par rapport à la face frontale (2) de la machine à découper (1) d'une position transversale à une position longitudinale et vice versa.

2. Dispositif selon la revendication 1, **caractérisé par le fait que** les plans de base (17, 18, 19) se présentent sous forme plans découpés à coins abattus (23) et avec des entailles (24, 25) permettant une interaction complémentaire avec au moins une station de travail (9) en forme de L positionnée latéralement à la face frontale (2) de la machine à découper (1).

3. Dispositif selon la revendication 1 ou 2, **caractérisé par le fait que** les plans de base (17, 18, 19) sont empilables et déplacables dans le sens longitudinal sur le chariot (10).

4. Dispositif selon une des revendications précédentes, **caractérisé par le fait que** les plans de base (17, 18, 19) ont des largeurs différentes, des coins abattus (23) et des entailles rectangulaires (24, 25).

5. Dispositif selon une des revendications précédentes, **caractérisé par le fait que** le chariot (10) est rattaché de facon articulée par un bras (13) sur une station de travail (9) de la machine à découper.

6. Dispositif selon une des revendications précédentes, **caractérisé par le fait que** les plans de base (17, 18, 19) du chariot (10) ainsi que la surface supérieure de la station de travail (9) sont équipés d'un système de coussin d'air ayant une surface perforée pour la sortie de l'air sous pression.

7. Dispositif selon une des revendications précédentes, **caractérisé par le fait que** la station de travail (9) présente une projection horizontale en L dont une surface (9A) s'étend à angle droit et l'autre paralléle à la face frontale (2) de la machine à découper (1).

8. Dispositif selon une des revendications précédentes, **caractérisé par le fait que** le chariot (10) et/ou les plans de base (17, 18, 19) sont munis d'un entraînement motorisé.
